# FASCICULE DE BREVET EUROPEEN

(11) **EP 1 445 152 B1**
(45) Date de publication et mention de la délivrance du brevet: **28.12.2005**
(21) Numéro de dépôt: 04290311.2
(22) Date de dépôt: 06.02.2004
(51) Int. Cl.: B60R 7/04

(54) **Console pour habitacle de véhicule**
Konsole für Fahrzeuginnenraum
Console for a motor vehicle interior

(30) Priorité: 07.02.2003 FR 0301647
(43) Date de publication de la demande: 11.08.2004
(73) Titulaire: Renault s.a.s., 92100 Boulogne Billancourt (FR)
(72) Inventeur: Bertholon, Patrick, 92310 Sevres (FR); Feyel, Marie-Claire, 78000 Versailles (FR); Mouangue, Serge, 78420 Carriere S/Seine (FR); Panhelleux, Jérôme, 75015 Paris (FR)

(56) Documents cités:
- DE-A- 19 646 809
- US-A- 6 116 674
- US-A- 6 135 529

## Description

La présente invention se rapporte à une console pour habitacle de véhicule, en particulier à une console coulissante selon le préambule de la revendication 1, voir EP-A-1 179 449.

Il est connu de proposer un véhicule avec une console qui présente un compartiment de stockage et qui est mobile dans l'habitacle selon des moyens de guidage entre une position avant et une position arrière. Une telle console est décrite dans le brevet EP 1 179 449 dans lequel la console est mobile sur un jeu de roulettes qui roulent sur un jeu de rails. La console coulisse entre une position avant située entre des sièges avant de l'habitacle et une position arrière pour qu'un passager d'un siège arrière puisse accéder au compartiment. L'accès au compartiment est commandé par un couvercle muni d'une poignée de préhension.

Lorsque la console est placée en position arrière, un usager d'un siège avant qui veut accéder au compartiment peut avoir à effectuer des mouvements malaisés pour ouvrir le couvercle en utilisant la poignée. De plus, des objets placés à l'avant du compartiment peuvent être difficile à attraper, surtout s'ils sont placés juste contre la paroi avant de la console, car le bras du usager devra adopter une posture désagréable.

De telles consoles coulissantes sont aussi décrites dans le brevet US 6 203 088. Un utilisateur de ces consoles pourra constater les mêmes difficultés d'accès au compartiment de stockage. De plus, chacune de ces consoles présente un couvercle monté pivotant vers l'arrière sur une charnière. Le couvercle peut gêner l'accès direct au contenu du compartiment, en particulier pour un passager arrière, que la console soit en position avant ou en position arrière. Un besoin constant d'amélioration de l'accès à un compartiment défini dans une console coulissante pour habitacle de véhicule peut donc être constaté.

Le but de l'invention est d'améliorer une console coulissante pour habitacle de véhicule.

Dans ce but, l'invention propose une console pour habitacle de véhicule, la console définissant un compartiment accessible par un usager à travers un orifice ménagé dans une région supérieure de la console, l'accès au compartiment étant commandé par un organe de fermeture, la console étant mobile selon des moyens de guidage entre une position avant et une position arrière dans l'habitacle, caractérisée en ce que au moins une partie de l'orifice est définie entre un segment curviligne de glissières longitudinales, l'organe de fermeture comporte un rideau prévu pour suivre le segment curviligne des glissières et la partie d'orifice présente une portion frontale qui s'étend vers le bas dans une région frontale de la console de façon que, tant dans la position avant que dans la position arrière de la console, l'orifice est accessible à un usager d'un siège avant par la portion frontale.

Avantageusement, quelle que soit la position de la console entre la position avant et la position arrière, un usager d'un siège avant peut manipuler le rideau sans avoir à effectuer de mouvement malaisé. De plus, quel que soit l'emplacement d'un objet contenu dans le compartiment, l'objet est accessible sans posture désagréable pour l'usager.

Selon l'invention, les glissières peuvent s'étendre vers l'arrière dans une portion centrale de la région supérieure da façon que le rideau contrôle l'accès au compartiment pour un usager d'un siège avant mais aussi pour un usager d'un siège arrière.

Avantageusement, quelle que soit la position de la console entre la position avant et la position arrière, un usager d'un siège arrière peut manipuler le rideau sans avoir à effectuer de mouvement malaisé.

Le rideau peut s'ouvrir de l'arrière vers l'avant de la console.

Le rideau peut présenter une manette prévue pour le maniement manuel du rideau.

Le rideau peut comprendre des lamelles et/ou une feuille continue.

La console peut comporter aussi un accoudoir intégré pouvant être placé dans une position d'utilisation selon un plan sensiblement horizontal au dessus du rideau, l'accoudoir étant superposé au moins partiellement au rideau, l'accoudoir pouvant être placé dans au moins une autre position dans laquelle il dégage le rideau.

L'accoudoir peut comprendre une échancrure d'accès à l'orifice. L'accoudoir peut présenter une fente longitudinale qui le divise en deux parties adaptées à être utilisées par des usagers situés de chaque côté de la console.

L'accoudoir peut être monté sur une poignée intégrée à la console. La poignée peut être adaptée pour manipuler la console selon les moyens de guidage. La poignée peut présenter une portion de préhension accessible par l'échancrure.

L'orifice peut être accessible à un usager d'un siège avant entre la position avant et la position arrière de la console. L'orifice peut être accessible à un usager d'un siège arrière entre la position avant et la position arrière.

L'invention concerne aussi un véhicule comprenant une console selon la présente l'invention La console peut être une console centrale de l'habitacle. Une console centrale n'est pas forcément placée exactement au centre de l'habitacle, mais est généralement placée entre deux sièges avant.

La présente invention va maintenant être décrite par un exemple de réalisation non limitatif, en liaison avec les dessins annexés sur lesquels :
- la figure 1 est vue schématique en deux dimensions d'une console selon l'invention implantée dans un habitacle de véhicule.
- la figure 2 est vue schématique en trois dimensions d'une console selon l'invention implantée dans un habitacle de véhicule.
- la figure 3 est un éclaté d'une console selon l'invention.

Selon l'invention, comme représenté sur les figures, un véhicule 1 présente un habitacle 2 avec une console coulissante 10 à l'arrière d'une planche de bord 7. L'habitacle comporte par exemple deux sièges avant 3 sur une première rangée et deux sièges arrière 5 sur une deuxième rangée. La deuxième rangée peut comporter une banquette.

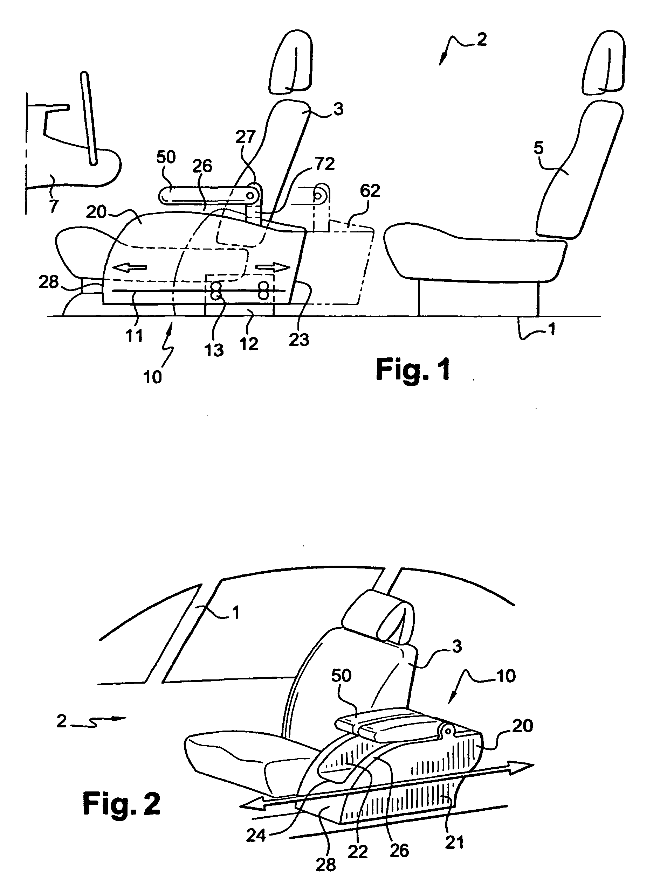

La console 10 est montée coulissante selon des moyens de guidage, entre une position dite avant comme représenté en trait plein à la figure 1 et une position dite arrière, à proximité des sièges arrières, comme représenté en traits mixtes à la figure 1. Les moyens de guidage de la console comportent des moyens mobiles par rapport au véhicule et des moyens fixes par rapport au véhicule. Les moyens de guidage déterminent une trajectoire déterminée de la console 10 dans l'habitacle 2, ici une trajectoire rectiligne d'avant en arrière.

Les moyens de guidage de la console 10 sont des rails 11 mobiles, internes à la console, solidaires d'un corps 20 de la console et montés coulissants par l'intermédiaire de roulettes 13 sur un chariot 12 fixe par rapport au plancher du véhicule. Les roulettes 13 sont solidaires du chariot 12. Un exemple de réalisation de moyens de guidage en translation d'une console est décrit de façon détaillé dans la demande de brevet EP 1 179 449. En variante non représentée, les rails sont fixes par rapport au plancher et le chariot avec les roulettes est intégré à la console qui roule sur les rails.

La console 10 selon l'invention comporte aussi un mécanisme (non représenté) de verrouillage électrique de rail 11 par rapport au chariot 12, avec un organe de commande de déverrouillage tel qu'un interrupteur à actionner par un utilisateur pour autoriser le coulissement de la console 10.

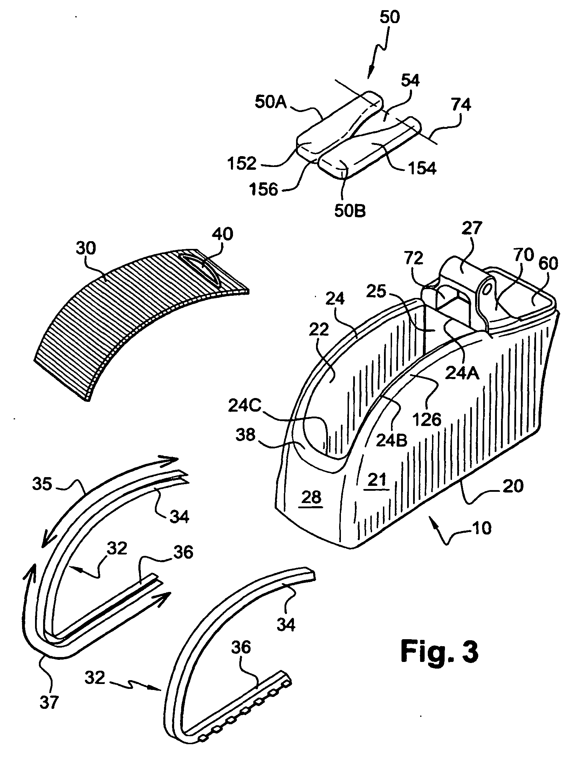

Dans l'exemple représenté, la console 10 comporte deux faces latérales longitudinales 21 sensiblement verticales, une face transversale avant 28 sensiblement verticale dans sa partie inférieure à proximité du plancher du véhicule, une face transversale arrière 23 inclinée de bas en haut vers l'arrière et une face supérieure 26 raccordée au haut des faces latérales et transversales. Le corps 20 présente une paroi interne verticale 25 (figure 3) située aux deux tiers de la longueur de la console 10, vers l'arrière.

Les génératrices de la face supérieure 26 sont, en allant de la face avant 28 vers la paroi interne 25, selon une directrice courbe, le rayon de courbure de la directrice allant croissant. A proximité de la paroi interne 25, la face supérieure 26 est tangente à un plan sensiblement horizontal, par exemple tangente à un plan incliné de quelques degrés vers le bas et vers la face arrière 23. La face supérieure 26 est sensiblement verticale à son raccordement avec la face transversale avant 28. Dans l'exemple représenté, la face supérieure 26 présente un sommet à mi longueur de la console 10. Dans l'exemple représenté, une portion frontale de la face supérieure 26 est la portion de la face supérieure 26 comprise entre la génératrice raccordée à la face avant 28 et une génératrice située à environ au tiers avant de la console 10. De façon générale, la région frontale de la console est une région avant de la console où une embouchure d'un orifice ménagé dans une face de cette région est inclinée vers l'avant, l'orifice ménageant un accès par l'avant. En ménageant l'orifice dans une face d'une région frontale, un utilisateur peut accéder au contenu du compartiment en passant la main dans l'orifice, perpendiculairement à l'embouchure de l'orifice dans la région, selon une direction inclinée, par exemple selon une direction inclinée de 15 degré à 90 degré par rapport à la verticale, vers l'avant pour une face frontale avant.

Un compartiment avant 22 de rangement est aménagé dans le corps 20. Un bac intérieur non représenté sur les figures est monté dans le corps pour délimiter le compartiment 22, entre les faces latérales 21, la face transversale avant 28 et la paroi interne verticale 25. La face supérieure 28 du corps est découpée pour ménager un orifice 24 d'accès au compartiment 22 par le haut.

L'orifice 24 est donc délimité par une embouchure comportant un segment arrière 24A horizontal à l'extrémité supérieure de la paroi interne 25, vers l'avant par un segment curviligne 24B supérieur raccordé à chaque extrémité du segment arrière 24A et, à l'avant, un segment avant 24C recourbé vers le bas et raccordé à chacune de ses extrémités aux segments curvilignes 24B. Un rebord avant 38 sensiblement horizontal est formé sur la tranche de la face transversale avant 28, entre la surface externe de la face avant et le segment 24C avant de l'embouchure. De même, un rebord vertical est formé sur la tranche de la face supérieure 26, entre la surface externe de la face supérieure et les segments curviligne 24B de l'embouchure.

La console 10 comporte une poignée 27 sous forme d'arche posée sur la face supérieure 26. La poignée 27 est posée en saillie par rapport à la face supérieure, c'est à dire au dessus du niveau de la face supérieure 26 à proximité de la poignée, à l'arrière par rapport la paroi interne 25.

L'orifice 24 est muni d'un organe de fermeture du compartiment 22, en l'espèce un rideau 30 (figure 3). Le rideau 30 est monté coulissant entre des glissières longitudinales de guidage 32.

Dans l'exemple représenté, au moins un segment curviligne des glissières 32 est en correspondance avec les segments curvilignes 24B de l'embouchure, au moins une partie de l'orifice 24 étant définie entre le segment curviligne des glissières 32. Le rideau 30 est prévu pour suivre le segment curviligne des glissières 32. La partie d'orifice 24 définie entre le segment curviligne des glissières 32 présente une portion qui s'étend vers le bas dans une région frontale de la console pour un accès aisé au compartiment par l'avant

Le rideau 30 est mobile entre une position d'accès et une position d'obturation. Il s'ouvre de l'arrière vers l'avant de la console. Une manette 40 est prévue pour son maniement manuel par un utilisateur. La manette 40 est intégrée à une lamelle du rideau, en saillie par rapport à une couche supérieure souple reliant les lamelles du rideau 30 et formant une feuille continue. Le rideau peut être constitué de lamelles reliées entre elles d'autres moyens qu'une couche souple. Il peut être constitué seulement par une feuille continue de rigidité appropriée.

Chaque glissière de guidage 32 présente une portion supérieure 34 (matérialisée par une flèche 35 à la figure 3) sensiblement en correspondance de l'orifice 24 et une portion inférieure 36 (matérialisée par une flèche 37 à la figure 3) située en dessous du niveau de l'extrémité inférieure 38 de l'orifice 24, c'est à dire en dessous du niveau du rebord 38.

Dans la position d'accès, le rideau est escamoté dans la console 10 (figure 2) et l'orifice 24 est complètement ouvert. Le rideau 30 est placé dans la portion inférieure 36 des glissières 32. La manette 40 est en appui sur le rebord 38.

Dans la position d'obturation, le rideau 30 est déployé en continu en correspondance de l'orifice 24. Le rideau 30 est placé dans la portion supérieure 34 des glissières 32.

La console 10 comporte un accoudoir 50 intégré situé au dessus de la face supérieure. L'accoudoir peut être placé dans une première position d'utilisation selon un plan sensiblement horizontal au dessus du rideau, l'accoudoir étant superposé au moins partiellement au rideau. L'accoudoir peut être placé dans au moins une autre position dans laquelle il dégage le rideau. L'accoudoir 50 est mobile à rotation de la première position horizontale avant d'utilisation telle que représenté sur les figures vers une position verticale (non représentée) ou vers une position horizontale arrière (non représentée). L'accoudoir 50 est placé en correspondance d'au moins une portion de la face supérieure de la console 10 et n'interdit pas l'accès au compartiment 22 par la portion de l'orifice située au niveau de la région frontale de la console.

Dans l'exemple représenté, l'accoudoir 50 présente une fente 156 longitudinale qui le divise en deux parties 50A, 50B adaptées à être utilisées par des usagers situés de chaque côté de la console 10. Chaque partie de l'accoudoir 50 est un bras longitudinal 50A pouvant tourner indépendamment de l'autre bras 50B. Dans l'exemple représenté, l'accoudoir 50 comporte une échancrure centrale 54 d'accès à l'orifice 24, à proximité de la poignée 27 sur laquelle est monté l'accoudoir 50.

L'échancrure 54 permet l'accès à l'orifice 24. Elle est délimitée par au moins un corps 152 de chaque bras de l'accoudoir et un pied 154 de raccordement à pivotement de l'accoudoir 50 sur la console, le corps étant situé à l'avant du pied et plus large que le pied.

L'arche formant la poignée 27 est ménagé dans un support 70 servant à la fixation de l'accoudoir 50. Sous l'arche, le support 70 présente un évidement 72 formant une portion de préhension de la poignée 27. La poignée est prévue pour être saisie par un usager pour manipuler la console selon les moyens de guidage en passant la main à travers la portion de préhension 72. Avantageusement, l'échancrure 54 dégage un accès à la portion de préhension 72.

La poignée 27 est ménagée dans le support 70 autour d'un axe 74 de l'accoudoir 50. La portion de préhension 72 est située entre face supérieure 26 à proximité de la poignée 27 et l'axe 74 de l'accoudoir 50, la portion de préhension 72 étant placé au dessus du niveau de l'orifice 24 à proximité de la poignée 27. L'axe de rotation 74 de l'accoudoir 50 traverse la poignée 27. Quand l'accoudoir 50 est placé dans une position d'utilisation selon un plan sensiblement horizontal au dessus de l'orifice 24, une surface supérieure de la poignée 27 est sensiblement coplanaire avec une surface supérieure de l'accoudoir. Le niveau d'une surface supérieure 126 de la région supérieure de la console à proximité de la poignée 27 est situé au dessous de la portion de préhension 72. Avantageusement pour l'ergonomie de la console, un usager ne risque pas de taper avec son coude dans la poignée 23 car elle n'est pas en saillie de l'accoudoir 50. La poignée peut être en retrait, c'est à dire en dessous du niveau de la surface supérieure de l'accoudoir 50 dans sa position horizontale.

Dans l'exemple représenté, le compartiment 22 est situé à l'avant de la console et la région frontale de la console où débouche l'orifice 24 est transversale, à l'avant de la console 10. La console comporte un compartiment arrière 60 avec son propre organe de fermeture, à savoir un couvercle 62 monté à rotation autour d'un axe situé à proximité de la poignée 27, en saillie par rapport à la surface supérieure 126 de la face supérieure 26. Le compartiment arrière 60 est destiné à un usage privilégié par un usager arrière.

Avantageusement, quelle que soit la position de l'accoudoir 50 placé sur la console 10, la console selon l'invention permet l'accès au contenu du compartiment 22. De plus, tout en pouvant accéder au contenu du compartiment, le maniement de la console est aisé pour tout usager d'un siège avant comme d'un siège arrière, quelle que soit la position de la console.

Avantageusement, un usager de la console selon l'invention peut accéder au contenu du compartiment en passant la main dans l'orifice vers le bas dans une région frontale de la console, le bras de l'usager étant incliné vers l'arrière pour un usager d'un siège avant voulant attraper un objet du compartiment quand la console est située en position arrière.

Avantageusement, un usager peut d'un seul geste libérer l'accès total au compartiment 22 et accéder au contenu du compartiment 22 en passant la main n'importe où dans l'orifice 24. De même, il peut d'un seul geste condamner complètement l'accès au contenu du compartiment 22. Bien évidemment, l'usager peut aussi positionner le rideau 30 dans diverses positions intermédiaire pour fermer partiellement l'orifice 24.

Même dans la position horizontale avant de l'accoudoir 50, l'utilisateur peut accéder à la manette 40 pour ouvrir partiellement le rideau 30, en correspondance de l'échancrure 54. L'utilisateur peut appliquer la main à plat en appuyant légèrement sur le rideau pour le faire coulisser sans utiliser la manette 40. Avantageusement, avec l'accoudoir 50 dans la position horizontale avant, il est possible de maintenir vertical ou en biais un objet long posé dans le compartiment 22 et maintenu dans l'échancrure 54 de l'accoudoir, en appui sur la poignée 27. De plus, la fente 156 de l'accoudoir 50 permet de maintenir verticalement un objet entre les deux parties de l'accoudoir, pour peu que l'épaisseur de l'objet soit compatible avec la largeur de la fente.

## Revendications

1. Console (10) pour habitacle (2) de véhicule (1), la console définissant un compartiment (22) accessible par un usager à travers un orifice (24) ménagé dans une région supérieure de la console, l'accès au compartiment étant commandé par un organe de fermeture (30), la console étant mobile selon des moyens de guidage (11, 12, 13) entre une position avant et une position arrière dans l'habitacle, **caractérisée en ce que** au moins une partie de l'orifice (24) est définie entre un segment curviligne (24C) de glissières (32) longitudinales, l'organe de fermeture comporte un rideau (30) prévu pour suivre le segment curviligne des glissières (32) et la partie d'orifice (24) présente une portion frontale qui s'étend vers le bas dans une région frontale de la console (10) de façon que, tant dans la position avant que dans la position arrière de la console (10), l'orifice (24) est accessible à un usager d'un siège avant (3) par la portion frontale.

2. Console selon la revendication 1, **caractérisée en ce que** les glissières (32) s'étendent vers l'arrière dans une portion centrale de la région supérieure de façon que le rideau contrôle l'accès au compartiment (22) pour un usager d'un siège arrière (5).

3. Console selon l'une quelconque des revendications précédentes, **caractérisée en ce que** le rideau (30) s'ouvre de l'arrière vers l'avant de la console (10).

4. Console selon l'une quelconque des revendications précédentes, **caractérisée en ce que** le rideau (30) présente une manette (40) prévue pour le maniement manuel du rideau.

5. Console selon l'une quelconque des revendications précédentes, **caractérisée en ce que** le rideau (30) comprend des lamelles et/ou une feuille continue.

6. Console selon l'une quelconque des revendications précédentes, **caractérisée en ce que** la console (10) comporte aussi un accoudoir (50) intégré pouvant être placé dans une position d'utilisation selon un plan sensiblement horizontal au dessus du rideau (30), l'accoudoir étant superposé au moins partiellement au rideau, l'accoudoir pouvant être placé dans au moins une autre position dans laquelle il dégage le rideau.

7. Console selon la revendication 6, **caractérisée en ce que** l'accoudoir (50) comprend une échancrure (54) d'accès à l'orifice (24), l'accoudoir présentant préférentiellement une fente (156) longitudinale qui le divise en deux parties (50A, 50B) adaptées à être utilisées par des usagers situés de chaque côté de la console (10).

8. Console selon l'une quelconque des revendications 6 ou 7, **caractérisée en ce que** l'accoudoir (50) est monté sur une poignée (27) intégrée à la console (10), la poignée étant préférentiellement adaptée pour manipuler la console selon les moyens de guidage (11, 12, 13).

9. Console selon l'une quelconque des revendications 6 à 8, **caractérisée en ce que** la poignée présente une portion de préhension (72) accessible par l'échancrure (54).

10. Véhicule (1) **caractérisé en ce qu'**il comprend une console (10) selon l'une quelconque des revendications précédentes, la console (10) étant préférentiellement une console centrale.

## Patentansprüche

1. Konsole (10) für eine Fahrgastzelle (2) eines Fahrzeuges (1), wobei die Konsole einen Verstauraum (22) definiert, der durch einen Nutzer über eine in einem oberen Bereich der Konsole ausgebildete Öffnung (24) zugänglich ist, wobei der Zugang zu dem Stauraum durch ein Verschlussorgan (30) bestimmt wird, wobei die Konsole gemäß Führungsmitteln (11, 12, 13) zwischen einer Vorderstellung und einer Rückstellung in der Fahrgastzelle beweglich ist, **dadurch gekennzeichnet, dass** wenigstens ein Teil der Öffnung (24) zwischen einem gekrümmten Abschnitt (24C) länglicher Gleitschienen (32) definiert ist, das Verschlussorgan einen Schirm (30) umfasst, der dafür vorgesehen ist, dem gekrümmten Abschnitt der Gleitschienen (32) zu folgen, und der Teil der Öffnung (24) einen Frontabschnitt aufweist, der sich nach unten in einen Frontbereich der Konsole (10) erstreckt, so dass, sowohl in der Vorderstellung wie auch in der Rückstellung der Konsole (10), die Öffnung (24) für einen Nutzer eines Vordersitzes (3) über den Frontabschnitt zugänglich ist.

2. Konsole gemäß Anspruch 1, **dadurch gekennzeichnet, dass** die Gleitschienen (32) sich nach hinten in einen zentralen Abschnitt des oberen Bereiches erstrecken, so dass der Schirm für einen Nutzer eines Rücksitzes (5) den Zugang zum Verstauraum (22) regelt.

3. Konsole gemäß einem der vorhergehenden Ansprüche, **dadurch gekennzeichnet, dass** der Schirm (30) sich vom hinteren Teil zum vorderen Teil der Konsole (10) hin öffnet.

4. Konsole gemäß einem der vorhergehenden Ansprüche, **dadurch gekennzeichnet, dass** der Schirm (30) einen Handgriff (40) aufweist, der zur manuellen Bedienung des Schirmes vorgesehen ist.

5. Konsole gemäß einem der vorhergehenden Ansprüche, **dadurch gekennzeichnet, dass** der Schirm (30) Lamellen und/oder ein durchgehendes Blatt umfasst.

6. Konsole gemäß einem der vorhergehenden Ansprüche, **dadurch gekennzeichnet, dass** die Konsole (10) auch eine integrierte Ellenbogenstütze (50) aufweist, die in eine Benutzungsstellung gemäß einer im Wesentlichen waagerechten Ebene über dem Schirm (30) gebracht werden kann, wobei die Ellenbogenstütze den Schirm zumindest teilweise überlagert, wobei die Ellenbogenstütze mindestens in eine andere Stellung gebracht werden kann, in welcher sie den Schirm freigibt.

7. Konsole gemäß Anspruch 6, **dadurch gekennzeichnet, dass** die Ellenbogenstütze (50) eine Aussparung (54) zum Zugang auf die Öffnung (24) aufweist, wobei die Ellenbogenstütze vorzugsweise einen Längsschlitz (156) aufweist, der sie in zwei Teile unterteilt (50A, 50B), die dafür angepasst sind, von Nutzern verwendet zu werden, die sich auf jeder Seite der Konsole (10) befinden.

8. Konsole gemäß einem der Ansprüche 6 oder 7, **dadurch gekennzeichnet, dass** die Ellenbogenstütze (50) auf einem in die Konsole (10) integrierten Griff (27) montiert ist, wobei der Griff vorzugsweise dafür angepasst ist, die Konsole gemäß den Führungsmitteln (11, 12, 13) zu betätigen.

9. Konsole gemäß einem der Ansprüche 6 bis 8, **dadurch gekennzeichnet, dass** der Griff einen über die Aussparung (54) zugänglichen Griffabschnitt (72) aufweist.

10. Fahrzeug (1), **dadurch gekennzeichnet, dass** es eine Konsole (10) gemäß einem der vorhergehenden Ansprüche aufweist, wobei die Konsole (10) vorzugsweise eine zentrale Konsole ist.

## Claims

1. A console (10) for the passenger space (2) of a vehicle (1), the console forming a compartment (22) that can be accessed by a user via an opening (24) provided in an upper region of the console, access to the compartment being controlled by a closure member (30), the console being movable via guide means (11, 12, 13) between a front position and a rear position in the passenger space, **characterised in that** at least a portion of the opening (24) is defined between a curvilinear segment (24C) of longitudinal slideways (32), the closure member comprises a screen (30) adapted to match the curvilinear segment of the slideways (32) and the opening portion (24) comprises a front portion which extends downwards in a front region of the console (10) so that, in both the front position and the rear position of the console (10), the opening (24) can be accessed by a user from a front seat (3) via the front portion.

2. A console as claimed in claim 1, **characterised in that** the slideways (32) extend towards the rear in a central portion of the upper region so that the screen controls access to the compartment (22) by a user in a rear seat (5).

3. A console as claimed in any one of the preceding claims, **characterised in that** the screen (30) opens from the rear to the front of the console (10).

4. A console as claimed in any one of the preceding claims, **characterised in that** the screen (30) comprises a handle (40) for the manual handling of the screen.

5. A console as claimed in any one of the preceding claims, **characterised in that** the screen (30) comprises slats and/or a continuous sheet.

6. A console as claimed in any one of the preceding claims, **characterised in that** the console (10) also comprises an integral arm rest (50) which may be placed in a position of use in a substantially horizontal plane above the screen (30), the arm rest being at least partially superposed on the screen, wherein the arm rest can be placed in at least one other position in which it releases the screen.

7. A console as claimed in claim 6, **characterised in that** the arm rest (50) comprises a cut-out (54) for access to the opening (24), the arm rest preferably comprising a longitudinal slot (156) which divides it into two parts (50A, 50B) adapted to be used by users on each side of the console (10).

8. A console as claimed in any one of claims 6 or 7, **characterised in that** the arm rest (50) is mounted on a handle (27) integral with the console (10), the handle preferably being adapted to manipulate the console via the guide means (11, 12, 13).

9. A console as claimed in any one of claims 6 to 8, **characterised in that** the handle has a gripping portion (72) which may be accessed via the cut-out (54).

10. A vehicle (1), **characterised in that** it comprises a console (10) as claimed in any one of the preceding claims, the console (10) preferably being a central console.
